# EUROPÄISCHE PATENTSCHRIFT

(11) **EP 2 865 885 B1**
(45) Veröffentlichungstag und Bekanntmachung des Hinweises auf die Patenterteilung: **02.11.2016**
(21) Anmeldenummer: 14189688.6
(22) Anmeldetag: 21.10.2014
(51) Int. Cl.: F03B 7/00

(54) **Sohlanbindung und Lockströmung bei Fischaufstiegsschnecken**
Base connection and lock flow for fish climbing screws
Liaison de base et débit d'attrait pour vis sans fin de montée de poissons

(30) Priorität: 22.10.2013 AT 8152013
(43) Veröffentlichungstag der Anmeldung: 29.04.2015
(73) Patentinhaber: Strasser & Gruber Ges.m.b.H., 3240 Mank (AT)
(72) Erfinder: Strasser, Bernhard, 3240 Mank (AT)
(74) Vertreter: Puchberger, Peter

(56) Entgegenhaltungen:
- EP-A2- 1 930 597
- DE-A1-102009 007 028
- DE-U1-202011 108 819
- DE-U1-202012 104 612

## Beschreibung

Die Erfindung bezieht sich auf eine Wasserkraftanlage zum Erzeugen elektrischer Energie durch Umwandlung von Strömungsenergie eines strömenden Gewässers, mit einer in einem Trog angeordneten Arbeitsschnecke, einem von dieser angetriebenen Generator und einer in gleicher Längsrichtung angeordneten, gegenläufigen Fischaufstiegsschnecke.

Eine derartige Ausbildung ist beispielsweise aus der deutschen Gebrauchsmusterschrift DE 20 2012 104 612 U1 entnehmbar, wobei bei dieser Ausbildung die Fischaufstiegsschnecke zentral in der Arbeitsschnecke angeordnet ist, und das untere Ende des Förderrohrs der Fischaufstiegsschnecke die Arbeitsschnecke am unteren Ende überragt und am oberen Ende bis in das Oberwasser oberhalb der Arbeitsschnecke reicht. Eine derartige Ausbildung hat den Nachteil, dass es für die Fische schwer ist, in die Fischaufstiegsschnecke hineinzufinden, obwohl eine entsprechende Lockströmung vorhanden wäre. Die Abströmung des Wassers aus der Arbeitsschnecke ist nämlich rund um den Eintritt des Förderrohres verteilt, sodass die Fische nicht zur Eingangsöffnung in die Fischaufstiegsschnecke gelangen.

Eine ähnliche Ausbildung ist auch in der deutschen Gebrauchsmusterschrift DE 20 2011 108 819 U1 beschrieben, wobei auch bei dieser Ausbildung ein gezieltes Hinführen der Fische zur Eingangsöffnung der Fischaufstiegsschnecke nicht gegeben ist. Überdies ist diese bekannte Ausbildung auch insofern nachteilig, als die Arbeitsschnecke in einem geschlossenen Rohr angeordnet ist, was leicht zu Verklemmungen durch eintretende Äste oder andere größere Gegenstände führen kann.

Der Erfindungen liegt nun die Aufgabe zugrunde eine Einrichtung der Eingangs genannten Art zu schaffen, mit welcher die Fische gezielt zur Eingangsöffnung der Fischaufstiegsschnecke geführt werden.

Erfindungsgemäß wird diese Aufgabe dadurch gelöst, dass die Eingangsöffnung der neben der Arbeitsschnecke liegenden Fischaufstiegsschnecke mit einer Sohlanbindung versehen ist, deren Oberfläche von deren ebenem Boden des Abströmkanals der Arbeitsschnecke in eine konische, der Eingangsöffnung der Fischaufstiegsschnecke entsprechende Ebene übergeht. Damit wird erreicht, dass die Fische, die gegen die Strömung des strömenden Gewässers anschwimmen und in den oberen Bereich aufsteigen wollen gezielt zur Eingangsöffnung der Fischaufstiegsschnecke geleitet werden.

Vorteilhafter Weise kann ein zwischen der Eingangsöffnung und der Sohlanbindung vorgesehener Spalt einstellbar sein. Damit kann durch das durch den Spalt durchtretende Wasser in der Sohlanbindung eine Lockströmung erreicht werden, welche den Fischen anzeigt, wo sie in die Fischaufstiegsschnecke eintreten sollen. Weiters kann ein Rechen die Eingangsöffnung der neben der Arbeitsschnecke liegenden Fischaufstiegsschnecke nach oben hin begrenzen, womit verhindert wird, dass Fische außen hinter die Eingangsöffnung der Fischaufstiegsschnecke gelangen und dort festsitzen.

Um den Fischen das Eintreten in die Eingangsöffnung zu erleichtern, kann als Lockströmung für die Fische aus der Arbeitsschnecke abströmendes Wasser unter den unteren Bereich der Fischaufstiegsschnecke eingeleitet sein, womit eine entsprechende Verstärkung der Lockströmung erreicht ist. Gleiches kann auch dadurch erzielt werden, dass der untere Bereich der Fischaufstiegsschnecke von einer Kammer bzw. Trennwand umgeben ist, welche eine zur Abströmöffnung der Arbeitsschnecke führende, durch einen Schieber regulierbare Öffnung aufweist.

In der Zeichnung ist ein Ausführungsbeispiel des Erfindungsgegenstandes dargestellt.

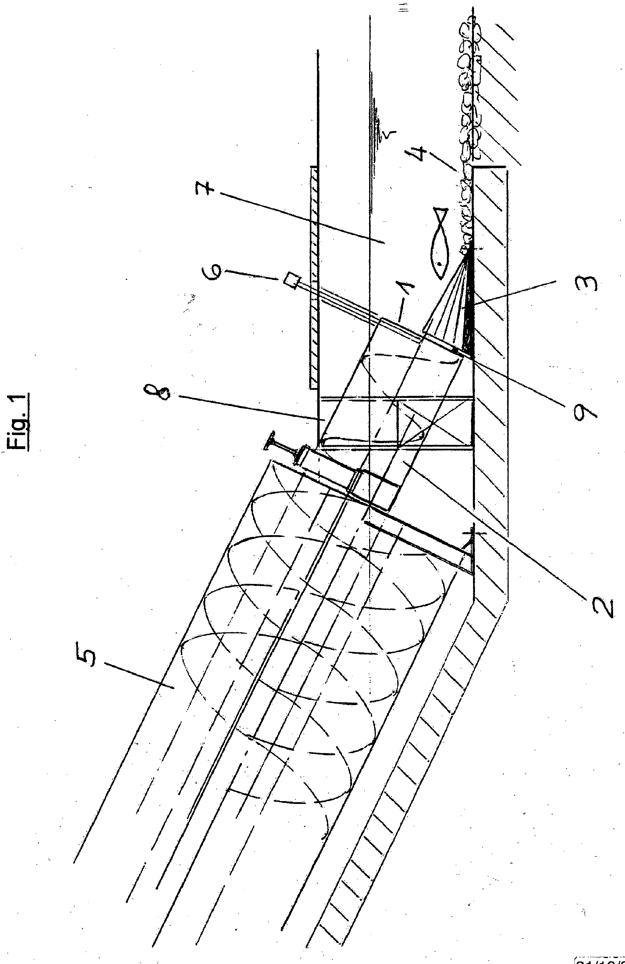

Fig. 1 zeigt schematisch einen Längsschnitt durch den unteren Bereich der Arbeitsschnecke mit dahinterliegender Fischaufstiegsschnecke.
Fig. 2 gibt den Einströmbereich in die Fischaufstiegsschnecke in größerem Maßstab wieder.
In Fig. 3 ist eine Vorderansicht der Fischaufstiegsschnecke in Richtung des Pfeiles "P" der Fig. 2 gesehen dargestellt.

Mit 1 ist die Eingangsöffnung einer Fischaufstiegsschnecke 2 bezeichnet, welche parallel zu einer Arbeitsschnecke 5 dieser benachbart angeordnet ist.

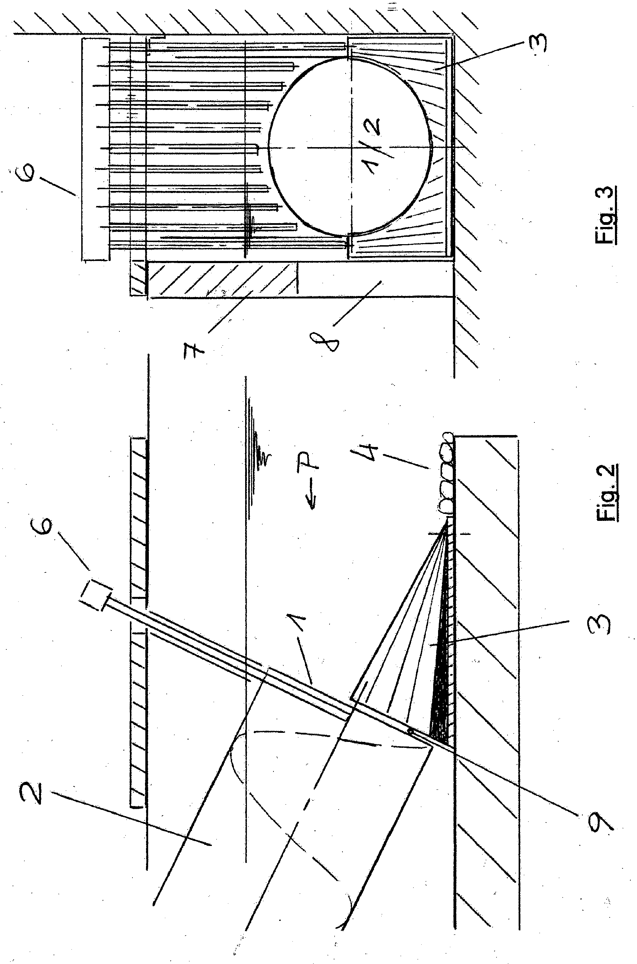

Der Eingangsöffnung 1 der Fischaufstiegsschnecke 2 ist eine Sohlanbindung 3 vorgelagert, welche vom Abströmkanal 4 zu der Eingangsöffnung 1 führt. Wie in Fig. 3 angedeutet, geht die Sohlanbindung 3 von dem ebenen Boden des Abströmkanales 4 aus und geht von der ebenen Fläche des Kanals 4 in eine halbzylindrische oder halbelliptische Ebene über, welche dem Profil der Eingangsöffnung 1 der Fischaufstiegsschnecke 2 entspricht.

Oberhalb der Eingangsöffnung 1 der Fischaufstiegsschnecke 2 ist ein Gitterrechen 6 vorgesehen, der, wie aus Fig. 3 ersichtlich, mit den Enden der Gitterstäbe etwa am Umfang der Fischaufstiegsschnecke 2 endet. Damit soll verhindert werden, dass Fische beim Aufwärtsschwimmen neben der Eingangsöffnung 1 der Fischaufstiegsschnecke 2 vorbei schwimmen oder darüber springen.

Seitlich zwischen der Fischaufstiegsschnecke 2 und der Arbeitsschnecke 5 ist eine Trennwand 7 vorgesehen, welche eine zur Sohlenanbindung 3 führende Öffnung 8 aufweist. Diese Öffnung 8 ist in nicht dargestellter Weise mittels eines Schiebers abschließbar. Damit ist der Anteil des aus der Arbeitsschnecke 5 strömenden Wasser, welcher zu der Fischaufstiegsschnecke 2 geführt wird, entsprechend einstellbar. Die Durchgangsöffnung 8 sowie die Eingangsöffnung 1 der Fischaufstiegsschnecke 2 ist unterhalb des Spiegels des Unterwassers angeordnet. Das bedeutet, dass die gesamte Eingangsöffnung 1 voll im Wasserstrom liegt, womit die Fische, wenn sie gegen die Strömung anschwimmen und in die Eingangsöffnung hineintreten, zuverlässig von der Aufstiegsschnecke mitgenommen werden.

Zwischen der Sohlanbindung 3 und der Eingangsöffnung 1 der Fischaufstiegsöffnung 2 ist ein Spalt 9 vorgesehen, welcher ebenfalls zum Einleiten von Wasser als Lockströmung dient. Dieser Spalt 9 ist in nicht dargestellter Weise vorwähl- und einstellbar.

Der die Sohlanbindung 3 bildende Übergangskonus ist vorzugweise aus Kunststoff hergestellt, der mittels Langlöcher einstellbar am Grund des Abströmkanals 4 befestigt ist. Es ist jedoch auch eine Stahlkonstruktion mit einer Betonauflage möglich. Der Spalt 9 zwischen der Eingangsöffnung 1 der Fischaufstiegsschnecke 2 und im gegenüberliegenden Ende der Sohlanbindung 3 soll zwischen 1 bis 5 Zentimeter betragen und ist über die erwähnten Langlöcher einstellbar.

Der Rechen 6 verhindert dabei wie schon erwähnt das Durchschwimmen der Fische hinter die Fischaufstiegsschnecke 2 ermöglicht aber das Durchfließen des Wassers, welches als

Lockströmung dient. Der Rechen ist herausziehbar angeordnet um eventuelle Verschmutzungen entfernen zu können.

Gemäß dem Leitfaden für Fischaufstiegshilfen ist eine Lockströmung vorgegeben und zwar in Form der Wassermenge, die aus der Fischaufstiegshilfe ausströmen muss um die Fische anzulocken. Die Wassermenge ist dabei vom Leitfisch abhängig, wobei, um immer die gewünschte Lockströmung zu erhalten, die Wassermenge mittels des Schiebers in der Öffnung 8 in der Trennwand 7 zwischen der Arbeitsschnecke 5 und der Fischaufstiegsschnecke 2 regelbar ist. Der Schieber ist dabei in Strömungsrichtung des Wassers aus der Arbeitsschnecke 5 vor der Eintrittsöffnung 1 der Fischaufstiegsschnecke 2 angeordnet und leitet so aus der Arbeitsschnecke 5 austretendes Wasser direkt zur Eingangsöffnung 1 der Fischaufstiegsschnecke 2 hin. Das Wasser fließt dabei seitlich an Rohr der Fischaufstiegsschnecke unter Umspülung des Rohres an die Eingangsöffnung 1 herum und erzeugt so innerhalb der Sohlanbindung die Lockströmung, die dann die Fische zur Eingangsöffnung 1 führt.

Die eigentliche Funktion der Fischaufstiegsschnecke ist gleich jener wie beim bekannten Stand der Technik, wobei die Fische innerhalb der Fischaufstiegsschnecke durch die Rotation nach oben gefördert und dort über einen entsprechenden Auslass in das Oberwasser der Arbeitsschnecke 5 entlassen werden.

## Patentansprüche

1. Wasserkraftanlage zum Erzeugen elektrischer Energie durch Umwandlung von Strömungsenergie eines strömenden Gewässers, mit einer in einem Trog angeordneten Arbeitsschnecke (5), einem von dieser angetriebenen Generator und einer in gleicher Längsrichtung angeordneten, gegenläufigen Fischaufstiegsschnecke (2), **dadurch gekennzeichnet, dass** die Eingangsöffnung (1) der neben der Arbeitsschnecke (5) liegenden Fischaufstiegsschnecke (2) mit einer Sohlanbindung (3) versehen ist, deren Oberfläche von deren ebenem Boden des Abströmkanals (4) der Arbeitsschnecke (5) in eine konische, der Eingangsöffnung (1) der Fischaufstiegsschnecke (2) entsprechende Ebene übergeht.

2. Wasserkraftanlage nach Anspruch 1, **dadurch gekennzeichnet, dass** ein zwischen der Eingangsöffnung (1) und der Sohlanbindung (3) vorgesehener Spalt (9) einstellbar ist.

3. Wasserkraftanlage nach Anspruch 1 oder 2, **dadurch gekennzeichnet, dass** ein Rechen (6) die Eingangsöffnung (1) der neben der Arbeitsschnecke (5) liegenden Fischaufstiegsschnecke (2) nach oben hin begrenzt.

4. Wasserkraftanlage nach einem der Ansprüche 1 bis 3, **dadurch gekennzeichnet, dass** als Lockströmung für die Fische aus der Arbeitsschnecke (5) abströmendes Wasser unter den unteren Bereich der Fischaufstiegsschnecke (2) eingeleitet ist.

5. Wasserkraftanlage nach einem der Ansprüche 1 bis 4, **dadurch gekennzeichnet, dass** der untere Bereich der Fischaufstiegsschnecke (2) von einer Kammer bzw. Trennwand (7) umgeben ist, welche eine zur Abströmöffnung der Arbeitsschnecke (5) führende, durch einen Schieber regulierbare, Öffnung (8) aufweist.

## Claims

1. A hydroelectric power plant for generating electrical power by converting the flow energy of a flowing water course, having a working screw (5) arranged in a trough, a generator driven by said screw and having a fish climbing route (2) operating in the opposite direction and arranged in the same longitudinal direction, **characterized in that** the inlet opening (1) of the fish climbing route (2) situated next to the working screw (5) is provided with a base connection (3), the surface of which transitions from the flat bottom of the outflow channel (4) of the working screw (5) into a conical surface, corresponding to the inlet opening (1) of the fish climbing route (2).

2. The hydroelectric power plant according to claim 1, **characterized in that** a gap (9) which is provided between the inlet opening (1) und the base connection (3) is adjustable.

3. The hydroelectric power plant according to claim 1 or 2, **characterized in that** a rake (6) forms an upper boundary of the inlet opening (1) of the fish climbing route (2) situated next to the working screw (5).

4. The hydroelectric power plant according to any one of claims 1 to 3, **characterized in that** as an attraction current for the fish, water flowing out of the working screw (5) is directed under the lower area of the fish climbing route (2).

5. The hydroelectric power plant according to any one of claims 1 to 4, **characterized in that** the lower area of the fish climbing route (2) is enclosed by a chamber respectively partition wall (7), which comprises an opening (8) leading to the outflow opening of the working screw (5), wherein said opening (8) can be regulated by a valve.

## Revendications

1. Centrale hydroélectrique pour produire de l'énergie électrique en convertissant l'énergie d'écoulement d'eaux qui s'écoulent, comportant une vis sans fin de travail (5)disposée dans une cuve, un générateur entraîné par cette dernière et une vis ascenseur à poissons (2) disposée dans la même direction longitudinale, à contre-courant, **caractérisée en ce que** l'ouverture d'entrée (1) de la vis ascenseur à poissons (2) située à côté de la vis sans fin de travail (5) est pourvue d'un raccordement au fond (3), dont la surface à partir du fond plat du canal d'évacuation d'eau (4) de la vis sans fin de travail (5) aboutit à un plan conique, correspondant à l'ouverture d'entrée (1) de la vis ascenseur à poissons (2).

2. Centrale hydroélectrique selon la revendication 1, **caractérisée en ce qu'**un interstice (9) prévu entre l'ouverture d'entrée (1) et le raccordement au fond (3) peut être ajusté.

3. Centrale hydroélectrique selon la revendication 1 ou 2, **caractérisée en ce que** un râteau (6) délimite vers le haut l'ouverture d'entrée (1) de la vis ascenseur à poissons (2) située à côté de la vis sans fin de travail (5).

4. Centrale hydroélectrique selon une des revendications 1 à 3, **caractérisée en ce que** comme débit d'attrait pour les poissons, de l'eau s'écoulant hors de la vis sans fin de travail (5) est guidée sous la zone inférieure de la vis ascenseur à poissons (2).

5. Centrale hydroélectrique selon une des revendications 1 à 4, **caractérisée en ce que** la zone inférieure de la vis ascenseur à poissons (2) est entourée par une chambre, resp. paroi de séparation (7), qui présente une ouverture (8) régulable par un tiroir, menant vers l'ouverture d'évacuation d'eau de la vis sans fin de travail (5).
